# FASCICULE DE BREVET EUROPEEN

(11) **EP 1 637 442 B1**
(45) Date de publication et mention de la délivrance du brevet: **09.11.2011**
(21) Numéro de dépôt: 05291935.4
(22) Date de dépôt: 19.09.2005
(51) Int. Cl.: B62D 65/16, B62D 25/08, B60R 19/34

(54) **Face avant pour véhicule automobile et procédé de montage correspondant**
Frontendmodul und dessen Montageverfahren
Front end for a car and his assembly process

(30) Priorité: 20.09.2004 FR 0409930
(43) Date de publication de la demande: 22.03.2006
(73) Titulaire: Faurecia Bloc Avant, 92000 Nanterre (FR)
(72) Inventeur: Frey, Stéphane, 25700 Valentigney (FR); Lentz, Michel, 25400 Exincourt (FR)
(74) Mandataire: Domenego, Bertrand

(56) Documents cités:
- EP-A- 1 251 038
- EP-A- 1 561 647
- FR-A- 2 820 390

## Description

La présente invention concerne une face avant pour véhicule automobile, ainsi qu'un procédé de montage correspondant.

Plus particulièrement, l'invention concerne une face avant pour véhicule automobile du type comprenant une première partie transversale, rigide, qui comporte une région centrale de maintien d'organes fonctionnels, cette partie transversale étant solidaire de la caisse du véhicule et une seconde partie, formant support de bouclier extérieur, destinée à assurer, entre la partie transversale et un bouclier extérieur, une liaison de résistance limitée par rapport à des sollicitations exercées selon l'axe longitudinal du véhicule.

Dans tout ce qui suit, les termes « avant », « arrière », « droite », et « gauche », sont définis par rapport à la position d'un conducteur d'un véhicule automobile. Un axe longitudinal, noté X-X' correspond à l'axe central et s'étend de l'avant à l'arrière du véhicule, un axe transversal s'étend de gauche à droite et un axe vertical s'étend de bas en haut.

La liaison entre une partie transversale rigide de maintien d'organes fonctionnels et un bouclier extérieur doit répondre à des contraintes de sécurité, notamment en présentant une résistance limitée aux forces longitudinales afin d'absorber tes chocs sur l'avant du véhicule, notamment les chocs piétons ainsi que les chocs dits « tête enfant ».

Pour répondre à ces contraintes et à d'autres contraintes notamment esthétiques, des solutions variées ont été envisagées pour assurer la liaison entre un bouclier extérieur, également appelé « élément de pare-chocs », et la partie transversale rigide de maintien d'organes fonctionnels qui est solidaire du véhicule et qui est également appelé « FAT » pour face avant technique.

Ces différentes solutions incluent l'utilisation de nervures sur le bouclier ou de pièces de renfort rapportées sur le bouclier.

Ces solutions ne sont cependant pas satisfaisantes, les nervures marquant le bouclier sur sa face extérieure de fait de sa faible épaisseur. De plus, elles nécessitent dans la plupart des cas, l'utilisation d'une pièce de renfort qui augmente la distorsion des jeux de montage.

Afin de pallier à ces défauts, il existe des faces avant du type de l'invention utilisant une partie formant support de bouclier assurant la liaison entre le bouclier extérieur et la partie transversale solidaire de la caisse du véhicule.

Un exemple d'une telle face avant se trouve dans la demande de brevet en France publiée sous le numéro 2 804 649.

Ce document décrit une face avant de véhicule automobile comprenant un bouclier relié à une partie transversale qui comporte une région centrale de maintien d'organes fonctionnels, la liaison étant réalisée par une ossature en matière plastique venue de matière avec le bouclier ou surmoulée sur celui-ci.

Ces ossatures sont formées de deux longerons s'étendant longitudinalement qui assurent une liaison de résistance limitée avec la partie transversale par rapport à des sollicitations longitudinales.

La face avant décrite dans ce document surmonte donc les inconvénients exposés précédemment, tout en répondant aux conditions de sécurité exigées relatives à l'absorption de chocs sur la partie avant du véhicule, grâce à une liaison de résistance limitée par rapport à des sollicitations exercées selon l'axe longitudinal.

Le document EP-A-1561 647 dévoile une Face avant pour véhicule automobile du type comprenant :
- une première partie transversale rigide, qui comporte une région centrale de maintien d'organes fonctionnels, cette partie transversale étant solitaire de la caisse du véhicule ; et
- une seconde partie formant support de bouclier extérieur, destinée à assurer, entre la partie transversale et un bouclier extérieur, une liaison de résistance limitée par rapport à une sollicitation exercée selon l'axe longitudinal du véhicule, et telle que la première partie comprend une poutre transversale présentant une surface de support sensiblement horizontale tournée vers le haut, et deux projections verticales espacées transversalement situées sous la surface, ces projections présentant des surfaces d'appui anti-basculement verticales tournées vers l'avant du véhicule, la seconde partie présentant des surfaces adaptées pour venir en appui sur les surfaces de support et d'appui de la première partie, ladite partie transversale et ladite seconde partie sont deux pièces distinctes.

Cependant, les faces avant du type décrit dans ce document présentent également une résistance faible par rapport aux forces verticales, de sorte que l'ensemble formé de la partie formant support de bouclier supérieur et du bouclier extérieur, peut être endommagé en réponse à une sollicitation verticale résultant par exemple de l'appui d'une personne sur la partie avant du véhicule.

Le but de la présente invention est de résoudre ce problème en définissant une face avant pour véhicule automobile, de faible résistance par rapport aux forces longitudinales et de résistance substantielle par rapport aux forces verticales ainsi qu'un procédé de montage correspondant.

A cet effet, l'invention a pour objet une face avant pour véhicule automobile selon la revendication 1.

Ainsi, grâce à l'utilisation de deux zones espacées transversalement, chacune réalisée d'une surface de support sensiblement horizontale et d'une surface d'appui anti-basculement sensiblement verticale, l'invention permet de réaliser une fonction anti-basculement de la partie support de bouclier extérieur par rapport à la partie transversale, en réponse à des sollicitations verticales.

Selon des modes particuliers de réalisation, la face avant peut comprendre une ou plusieurs des caractéristiques suivantes, prises isolément ou selon toutes les combinaisons spécifiquement possibles :
- ladite seconde partie présente une résistance limitée par rapport à des sollicitations exercées selon l'axe longitudinal ;
- ladite seconde partie est adaptée pour servir de support à des pièces avant de carrosserie, distinctes dudit bouclier extérieur ; et
- ladite seconde partie est adaptée pour servir de support à un élément de serrure de capot.

L'invention concerne également un procédé de montage d'une face avant pour véhicule automobile selon la revendication 5.

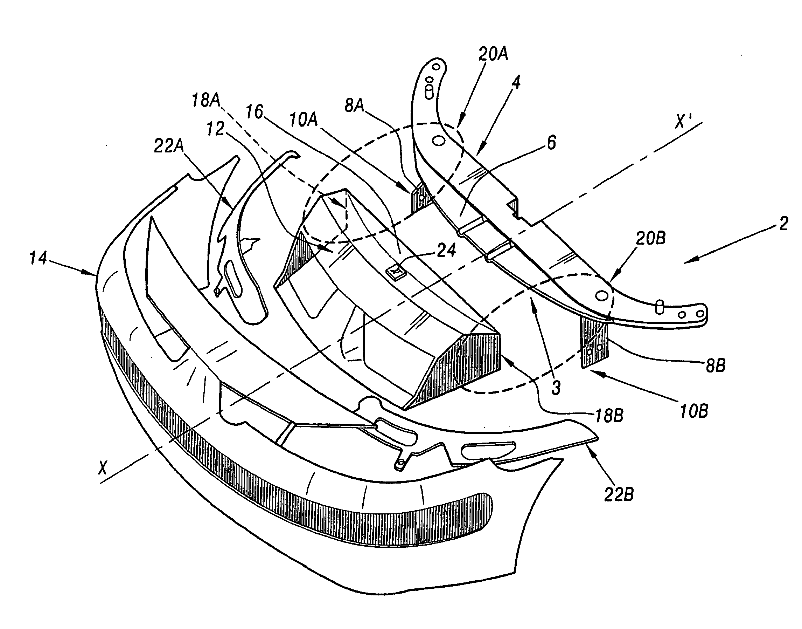

L'invention sera mieux comprise à la lecture de la description qui va suivre, donnée uniquement à titre d'exemple et faite en se référant au dessin annexé qui représente une vue schématique en perspective éclatée d'une face avant selon l'invention.

Cette face avant comprend tout d'abord une première partie transversale 2 rigide, solidaire de la caisse du véhicule qui n'est pas représentée. Cette partie transversale 2 comporte une région centrale 3 de maintien d'organes fonctionnels, adaptée pour accueillir par exemple un radiateur de refroidissement d'un liquide ainsi qu'un ventilateur associé. Ces organes fonctionnels ne sont pas non plus représentés.

La partie transversale 2 est couramment appelée « face avant technique » ou « FAT ».

Cette partie transversale 2 comprend une poutre 4 formée d'une partie rectiligne aux extrémités incurvées vers l'arrière du véhicule, et présentant de manière générale, une forme adaptée à ce véhicule, et notamment des parties en saillie et des évidements adaptés pour la liaison avec le véhicule.

Cette partie transversale 2 comporte en outre sur la partie avant de la poutre 4, une surface plane 6 sensiblement horizontale s'étendant sur toute la partie rectiligne de la poutre 4, et dont le bord avant présente un profil courbe s'incurvant vers l'arrière à ses extrémités transversales.

La surface 6 a ainsi une forme générale d'une section de disque.

La partie transversale 2 comporte enfin deux projections verticales 8A, 8B espacées transversalement l'une de l'autre, et placées au-dessous de la surface 6. Les projections 8A et 8B ont une forme générale de plaques rectangulaires s'étendant vers le bas et parallèlement à l'axe longitudinal du véhicule, de sorte que chaque projection 8A, 8B voit sa plus grande longueur verticale, sa largeur longitudinale et présente son épaisseur vers l'avant et l'arrière du véhicule.

Chacune des projections 8A, 8B, présente ainsi une surface d'appui 10A, 10B formée de sa tranche orientée vers l'avant du véhicule.

La face avant comprend en outre une seconde partie 12 formant support du bouclier extérieur également appelé « plastron », destinée à assurer une liaison entre la partie transversale 2 et un bouclier extérieur 14.

La seconde partie 12 formant support de bouclier extérieur est adaptée pour présenter une résistance limitée par rapport à des sollicitations exercées selon l'axe longitudinal par exemple par la combinaison de matériaux de résistances différentes et/ou l'affaiblissement de sa structure de manière appropriée.

La partie 12 formant support du bouclier extérieur présente une face arrière dont la forme générale est conjuguée à celle de la face avant de la partie transversale 2 et une face avant dont la forme générale est conjuguée à la face arrière du bouclier extérieur 14.

Plus précisément, la seconde partie 12 a une surface plane 16 en saillie sur sa face arrière 6, dont la forme est conjuguée à celle de la surface 6 de la partie transversale 2.

La seconde partie 12 présente également sur sa face arrière, des montants verticaux 18A et 18B, adaptés pour venir au contact des surfaces d'appui 10A et 10B des projections 8A et 8B de la partie transversale 2.

Ainsi, la liaison entre la partie transversale 2 et la seconde partie 12 formant support du bouclier extérieur 14, est assurée dans deux zones 20A et 20B espacées transversalement.

Dans chacune de ces zones 20A et 20B, la solidarisation entre la partie transversale 2 et la seconde partie 12 est assurée par la surface sensiblement horizontale 6 remplissant une fonction de support de la seconde partie 12 et par les surfaces 10A et 10B sensiblement verticales situées au-dessous de la surface de support 6 remplissant chacune une fonction d'appui anti-basculement par le contact respectivement avec les montants 18A et 18B.

Ainsi, en fonctionnement, lorsque le bouclier 14 est monté sur la face avant de l'invention, la liaison entre le bouclier 14 et le véhicule automobile présente une résistance limitée par rapport à des sollicitations exercées selon l'axe longitudinal, la seconde partie 12 formant support, étant adaptée pour absorber les chocs en se déformant et/ou en se déplaçant par rapport à la partie transversale 2.

De même, la liaison entre le bouclier 14 et le véhicule automobile présente une résistance substantielle par rapport aux forces verticales grâce à l'action combinée, dans chacune des zones de support 20A et 20B espacées transversalement, de la surface de support sensiblement horizontale 6 et d'une surface d'appui anti-basculement 10A, 10B sensiblement verticale empêchant ainsi le basculement de l'assemblage du bouclier 14 et de la seconde partie 12.

De plus, dans le mode de réalisation, la seconde partie 12 formant support de bouclier extérieur 14 est adaptée pour absorber également les chocs exercés selon une sollicitation verticale en se déformant et/ou en se déplaçant par rapport à la partie transversale 2. Ainsi, cette seconde partie 12 assure entre la partie transversale et le bouclier extérieur, une liaison de résistance limitée par rapport aux sollicitations verticales.

La seconde partie 12 permet donc d'accroître la résistance verticale de l'ensemble formé du support 12 et du bouclier 14, cette résistance étant limitée afin de répondre également aux critères de sécurité, notamment dans le cas de chocs piétons tels que des chocs dits « tête enfant ».

Par ailleurs, dans le mode de réalisation décrit, la seconde partie 12 formant support de bouclier extérieur, est également adaptée pour supporter d'autres pièces avant de la carrosserie, telles que par exemple des supports sous-projecteurs 22A et 22B et un mécanisme de serrure pour capot 24.

Le procédé de montage de la face avant de l'invention comprend une étape de fixation de la première partie transversale 2 sur le véhicule automobile, suivie d'une étape de fixation de la seconde partie 12 formant support de bouclier extérieur, préalablement à la fixation du bouclier extérieur 14.

En particulier, les véhicules sont produits avec la première partie transversale 2 et la seconde partie 12 montées, tandis que le bouclier extérieur 14 est monté ultérieurement, éventuellement sur un autre site.

Ce procédé réduit ainsi les opérations de montage ultérieures et facilite le montage du bouclier directement sur la seconde partie 12 formant support de bouclier.

En conséquence, le procédé de montage de l'invention permet de réduire les jeux de montage par l'intégration de la seconde partie 12 préalablement au montage du bouclier 14.

Avantageusement, le procédé de montage comprend la fixation des pièces de carrosserie secondaires sur la seconde partie 12 formant support de bouclier extérieur, préalablement au montage de ce bouclier 14.

En variante, la partie transversale 2 et la seconde partie 12 formant support de bouclier extérieur, sont formées d'une unique pièce, par exemple moulée en plastique et présentant également une surface de support et une surface d'appui anti-basculement.

Bien entendu, d'autres variantes et dispositions peuvent être envisagées dans le cadre défini par les revendications.

Notamment, plusieurs surfaces de support et surfaces d'appui anti-basculement peuvent être envisagées. Par exemple, les différents éléments peuvent être symétriques ou dissymétriques, continus ou discontinus.

Il est à noter que la partie 12 vient en plus du dispositif habituel de poutre pare-chocs non représentée. Cette poutre transversale est classiquement localisée à l'arrière de la zone hachurée du bouclier 14, et est reliée aux longerons non représentés du véhicule par exemple par l'intermédiaire d'absorbeur d'énergie.

Certains types de véhicule présentent un bouclier ayant une première zone sensiblement verticale classique et une seconde zone localisée au-dessus de la première zone et dirigée vers l'arrière du véhicule. La poutre de pare-chocs est localisée à l'arrière de a première zone, et la partie 12 selon l'invention est localisée à l'arrière de la seconde zone.

## Revendications

1. Face avant pour véhicule automobile du type comprenant :
- une première partie transversale (2) rigide, qui comporte une région centrale (3) de maintien d'organes fonctionnels, cette partie transversale (2) étant solidaire de la caisse du véhicule ; et
- une seconde partie (12) formant support de bouclier extérieur (14), destinée à assurer, entre la partie transversale (2) et un bouclier extérieur (14), une liaison de résistance limitée par rapport à une sollicitation exercée selon l'axe longitudinal du véhicule,
et telle que la première partie (2) comprend une poutre transversale (4) présentant une surface de support (6) sensiblement horizontale tournée vers le haut, et deux projections verticales (8A, 8B) espacées transversalement situées sous la surface (6), ces projections (8A, 8B) présentant des surfaces d'appui anti-basculement (10A, 10B) verticales tournées vers l'avant du véhicule, la seconde partie (12) présentant des surfaces (16, 18A, 18B) adaptées pour venir en appui sur les surfaces de support (6) et d'appui (10A, 10B) de la première partie (2) et étant rendue solidaire de la première partie transversale (2) suivant la surface de support (6) et les surfaces d'appui (10A, 10B) dans deux zones (20A, 20B) espacées transversalement, ladite partie transversale (2) et ladite seconde partie (12) étant deux pièces distinctes, présentant des formes conjuguées de manière à assurer ladite solidarisation, les projections (8A, 8B) étant des plaques verticales présentant des tranches orientées vers l'avant du véhicule et définissant les surfaces d'appui anti-basculement.

2. Face avant selon la revendication 1, **caractérisée en ce que** ladite seconde partie (12) présente une résistance limitée par rapport à des sollicitations exercées selon l'axe longitudinal.

3. Face avant selon l'une quelconque des revendications 1 à 2, **caractérisée en ce que** ladite seconde partie (12) est adaptée pour servir de support à des pièces avant de carrosserie (22A, 22B), distinctes dudit bouclier extérieur (14).

4. Face avant selon l'une quelconque des revendications 1 à 3, **caractérisée en ce que** ladite seconde partie (12) est adaptée pour servir de support à un élément de serrure de capot (24).

5. Procédé de montage d'une face avant pour véhicule automobile, comportant :
- le montage, solidaire de la caisse du véhicule, d'une première partie transversale (2) rigide comportant une région centrale de maintien d'organes fonctionnels (3) ; et
- le montage, solidaire de ladite première partie transversale (2), d'une seconde partie (12) formant support de bouclier extérieur (14), destinée à assurer entre la partie transversale (2) et un bouclier extérieur (14), une liaison de résistance limitée par rapport à des sollicitations exercées selon l'axe longitudinal du véhicule, **caractérisé en ce que** la première partie (2) comprend une poutre transversale (4) présentant une surface de support (6) sensiblement horizontale tournée vers le haut, et deux projections verticales (8A, 8B) espacées transversalement situées sous la surface (6), ces projections (8A, 8B) présentant des surfaces d'appui anti-basculement (10A, 10B) verticales tournées vers l'avant du véhicule, la seconde partie (12) présentant des surfaces (16, 18A, 18B) adaptées pour venir en appui sur les surfaces de support (6) et d'appui (10A, 10B) de la première partie (2), ladite étape de montage solidaire de la seconde partie (12) sur la partie transversale (2) mettant en oeuvre deux zones de liaison (20A, 20B) espacées transversalement, dans lesquelles lesdites surfaces (16, 18A, 18B) de la seconde partie (12) sont rendues solidaires des surfaces de support (6) et d'appui (10A, 10B) de la première partie (2), ladite partie transversale (2) et ladite seconde partie (12) étant deux pièces distinctes, présentant des formes conjuguées de manière à assurer ladite solidarisation, les projections (8A, 8B) étant des plaques verticales présentant des tranches orientées vers l'avant du véhicule et définissant les surfaces d'appui anti-basculement, ladite étape de montage de la seconde partie (12) étant réalisée préalablement au montage dudit bouclier extérieur (14).

## Claims

1. Front end for a motor vehicle of the type comprising:
• a rigid first transverse section (2), which has a centrale region (3) for holding functional elements, this transverse section (2) being integral to the body of the vehicle; and
• a second section (12) forming the support for an external bumper (14) intended to ensure between the transverse section (2) and an external bumper (14) a connection having limited resistance in relation to a stress exerted along the longitudinal axis of the vehicle,
and such that the first section (2) comprises a transverse beam (4) having a substantially horizontal upwardly directed support surface (6) and two transversely spaced vertical projections (8A, 8B) located below the surface (6), wherein these projections (8A, 8B) have vertical anti-roll bearing surfaces (10A, 10B) directed towards the front of the vehicle, the second section (12) has surfaces (16, 18A, 18B) fitted to rest against the support (6) and bearing (10A, 10B) surfaces of the first section (2) and are integrated to the first transverse section (2) along the support (6) and bearing (10A, 10B) surfaces in two transversely spaced zones (20A, 20B), wherein said transverse section (2) and said second section (12) are two separate parts, which have matching shapes to assure their integration, wherein the projections (8A, 8B) are vertical plates having sections pointing towards the front of the vehicle and defining the anti-roll bearing surfaces.

2. Front end according to claim 1, **characterised in that** said second section (12) has a limited resistance in relation to stresses exerted along the longitudinal axis.

3. Front end according to any one of claims 1 to 3?, **characterised in that** said second section (12) is fitted to act as support for front parts of the vehicle body (22A, 22B) separate from said external bumper (14).

4. Front end according to any one of claims 1 to 4:, **characterised in that** said second section (12) is fitted to act as support for a bonnet locking element (24).

5. Assembly process of a front end for a motor vehicle comprising:
• assembling a rigid first transverse section (2) to be integral to the vehicle body having a central region for holding functional elements; and
• assembling a second section (12) to be integral to said first transverse section (2) forming the support for an external bumper (14) intended to ensure between the transverse section (2) and an external bumper (14) a connection having limited resistance in relation to a stress exerted along the longitudinal axis of the vehicle,
**characterised in that** the first section (2) comprises a transverse beam 14) having a substantially horizontal upwardly directed support surface (6) and two transversely spaced vertical projections (8A, 8B) located below the surface (6), wherein these projections (8A, 8B) have vertical anti-roll bearing surfaces (10A, 10B) directed towards the front of the vehicle, the second section (12) has surfaces (16, 18A, 18B) fitted to rest against the support (6) and bearing (10A, 10B) surfaces of the first section (2), wherein said step of assembling the second section (12) integrally with the transverse section (2) utilises two transversely spaced connecting zones (20A, 20B), in which said surfaces (16, 18A, 18B) oftl1e seconde section (12) are integrated with the support (6) and bearing (10A, 10B) surfaces of the first section (2), wherein said transverse section (2) and said second section (12) are two separate parts, which have matching shapes to assure their integration, wherein the projections (8A, 8B) are vertical plates having sections pointing towards the front of the vehicle and defining the anti-roil bearing surfaces, wherein said step of assembling the second section (12) is conducted prior to the assembly of said external bumper (14).

## Patentansprüche

1. Frontseite eines Kraftfahrzeugs, umfassend:
- ein starres Querelement (2) mit einem zentralen Bereich (3) zum Halten von Funktionsorganen, welches Querelement (2) am Fahrzeugchassis befestigt ist; und
- ein zweites Element (12) zur Lagerung eines äußeren Schilds (14) zur Sicherstellung einer Verbindung zwischen dem Querelement (2) und dem äußeren Schild (14) mit begrenzter Festigkeit bezüglich einer Belastung entlang der Längsachse des Fahrzeugs,
welches erste Element (2) einen Querträger (4) aufweiset, mit einer im wesentlichen horizontalen Tragfläche (6), die nach oben orientiert ist, und zwei vertikalen Vorsprünge (8A,8B), die in Querrichtung voneinander beabstandet auf der Tragfläche (6) angeordnet sind, welche Vorsprünge (8A,8B) vertikale kippanschlagsflächen (10A, 10B) aufweisen, die zur Front des Fahrzeugs gewandt sind, wobei das zweite Element (12) Oberflächen (16,18A,18B) aufweist, die zum Anschlag an die Tragfläche (6) und zum Anschlag (10A, 10B) des ersten Elements (2) und zum Halten des ersten Querelements (2) gegen die Tragfläche (6) und seine Anschlagsflächen (10A, 10B) in zwei in Querrichtung beabstandeten Zonen (20A, 20B) vorgesehen sind, wobei das Querelement (2) und das zweite Element (12) zwei einzelne Teile sind, die zueinander komplementäre Formen aufweisen, so dass die Verbindung gewährleistet wird, und welche Vorsprünge (8A, 8B) als vertikale Platten ausgebildet sind, welche Ränder aufweisen, die zur Front des Fahrzeugs weisen und die Kippanschlagsflächen bilden.

2. Frontseite eines Kraftfahrzeugs gemäß Anspruch 1, **dadurch gekennzeichnet, dass** das zweite Element (12) einen begrenzten Widerstand gegenüber einer Belastung entlang der Längsachse aufweist.

3. Frontseite eines Kraftfahrzeugs gemäß einem der Ansprüche 1 oder 2, **dadurch gekennzeichnet, dass** das zweite Element (12) dazu vorgesehen ist, die vorderen Teile der Karosserie (22A,22B) zu tragen, die durch den äußeren Schild (14) gebildet sind.

4. Frontseite eines Kraftfahrzeugs gemäß einem der Ansprüche 1 bis 3, **dadurch gekennzeichnet, dass** das zweite Element (12) dazu vorgesehen ist, ein Sicherungsetement der Motorhaube (24) zu tragen.

5. Verfahren zur Montage einer Frontseite eines Kraftfahrzeugs, umfassend die folgenden Schritte;
- Montieren am Chassis des Kraftfahrzeugs eines ersten starren Querelements (2) mit einem zentralen Bereich zum Halten von Funktionsorganen (3); und
- Montieren an diesem ersten Querelement (2) eines zweiten Elements (12) zum Tragen des äußeren Schilds (14), welches dazu vorgesehen ist, zwischen dem Querelement (2) und dem äußeren Schild (14) eine Verbindung mit begrenzter Festigkeit gegenüber Belastungen entlang einer Längsachse des Fahrzeugs herzustellen, **dadurch gekennzeichnet, dass** das erste Element (2) einen Querträger (4) umfasst, der eine im wesentlichen horizontale Tragfläche (6) aufweist, die nach oben gewandt ist, und zwei vertikale Vorsprünge (8A,8B), die in Querrichtung beabstandet auf der Tragfläche (6) angeordnet sind, welche Vorsprünge (8A,8B) vertikale Kippanschlagsflächen (10A,10B) aufweisen, die zur Front des Fahrzeugs gewandt sind, und dass zweite Element (12) Flächen (16,18A,18B) aufweist, die zum Anschlag an den Tragflächen (6) zum Anschlag (10A,10B) des ersten Elements (2) vorgesehen sind, welcher Schritt der Montage des zweiten Elements (12) auf dem Querelement (2) in zwei Verbindungsbereichen (20A,20B) durchgeführt wird, die in Querrichtung beabstandet sind, in weichem die Flachen (16,18A,18B) des zweiten Elements (12) in Verbindung mit den Lagerflächen (6) und Anschiagstlächen (10A,10B) des ersten Elements (2) gehalten sind, wobei das Querelement (2) und das zweite Element (12) zwei getrennte Teile sind, die zueinander komplementäre Formen zur Bildung der Verbindung aufweisen, und die Vorsprünge (8A,8B) vertikale Platten sind, die Ränder ausweisen, die zur Front des Fahrzeugs weisen und die Kippanschiagstläches darstellen, und welcher Schritt der Montage des zweiten Elements (12) vor der Montage des äußeren Schilds (14) durchgeführt wird.
